# EUROPEAN PATENT SPECIFICATION

(11) **EP 2 865 876 B1**
(45) Date of publication and mention of the grant of the patent: **12.09.2018**
(21) Application number: 14189791.8
(22) Date of filing: 21.10.2014
(51) Int. Cl.: F02K 1/72, F02K 1/82

(54) **Nacelle comprising a thrust reverser fan ramp with noise suppression**
Schubumkehrvorrichtungslüfterrampe mit Rauschunterdrückung auweisende Gondel
Nacelle comprenant une rampe d'inverseur de poussée avec suppression de bruit

(30) Priority: 22.10.2013 US 201314060194
(43) Date of publication of application: 29.04.2015
(73) Proprietor: Rohr, Inc., Chula Vista, CA 91910-2098 (US)
(72) Inventor: Aten, Michael, San Diego, CA 92129 (US)
(74) Representative: Dehns

(56) References cited:
- EP-A2- 1 310 658
- US-A- 5 806 302
- US-B1- 6 170 254

## Description

### BACKGROUND

### 1. Technical Field.

Aspects of the present invention relate to a propulsion system nacelle that includes a thrust reverser, and more particularly relate to a propulsion system nacelle that includes a thrust reverser fan ramp. 2. Background Information.

It is known to provide a propulsion system that includes, for example, an engine (e.g., a gas turbine engine), a nacelle that at least partially surrounds the engine, and a pylon that connects the engine and the nacelle to a vehicle (e.g., an aircraft). EP 1310658 discloses an acoustic treated thrust reverser bullnose fairing assembly. In some instances, the nacelle includes a thrust reverser, and the thrust reverser includes a fan ramp. Aspects of the present invention are directed to a thrust reverser fan ramp that includes a noise suppression feature.

### SUMMARY OF ASPECTS OF THE INVENTION

According to an aspect of the present invention, a nacelle for use in a propulsion system and comprising a fan ramp is provided as claimed in claim 1.

According to an alternative or additional aspect of the present invention, the fan ramp is an aerodynamic surface that is active during the thrust reversing operation.

According to an alternative or additional aspect of the present invention, the fan ramp is exposed to a bypass airstream passing through a bypass duct of the propulsion system during the thrust reversing operation.

According to an alternative or additional aspect of the present invention, the fan ramp aids in guiding the bypass airstream to make a radially outward turn from the bypass duct through the array of cascades during the thrust reversing operation.

According to an alternative or additional aspect of the present invention, the fan ramp centerline is aligned with an axial centerline of a gas turbine engine included in the propulsion system.

According to an alternative or additional aspect of the present invention, the noise suppression feature that is operable to suppress noise within the bypass duct.

According to an alternative or additional aspect of the present invention, the noise suppression feature is defined by a component of the nacelle that at least partially defines the fan ramp.

According to an alternative or additional aspect of the present invention, the nacelle includes a component that includes a perforated layer, a base layer, and a core layer, all of which are stacked in a superimposed relationship so that the core layer is disposed between the perforated layer 6 and the base layer, the perforated layer includes an aperture that is configured to permit noise to pass there through, the core layer includes a substructure that is operable receive an amount of the noise that passes through the aperture and that is operable to reflect the noise back out of the aperture such that sound waves of the reflected noise are out of phase and destructively interfere with sound waves of noise outside the substructure.

According to an alternative or additional aspect of the present invention, the substructure is honey-comb shaped.

According to an alternative or additional aspect of the present invention, the noise suppression feature is defined by a bulk sound wave absorber.

According to an alternative or additional aspect of the present invention, the noise suppression feature is a first noise suppression feature that is defined by a reflector that is operable to reflect noise toward a second noise suppression system.

According to an alternative or additional aspect of the present invention, the fan ramp extends between a forward fan ramp edge and an aft fan ramp edge, wherein the forward fan ramp edge is disposed proximate an aft end of a fan case and the forward fan ramp edge is disposed proximate a forward end of an array of cascades.

These and other aspects of the present invention will become apparent in light of the drawings and detailed description provided below.

### BRIEF DESCRIPTION OF THE DRAWINGS

FIG. 1 is a perspective view of a propulsion system.
FIG. 2 is an exploded perspective view of the propulsion system of FIG. 1.
FIG. 3 is a sectional schematic view of the thruster reverser, the exhaust centerbody, and the exhaust nozzle portions of the nacelle that is included in the propulsion system of FIG. 1. In FIG. 3, the translating structure and the blocker doors of the thrust reverser are in their respective stowed positions.
FIG. 4 is a sectional schematic view of the thruster reverser, the exhaust centerbody, and the exhaust nozzle portions of the nacelle that is included in the propulsion system of FIG. 1. In FIG. 4, the translating structure and the blocker doors of the thrust reverser are in their respective deployed positions.
FIG. 5 is a sectional view of the thruster reverser portion of the nacelle that is included in the propulsion system of FIG. 1.
FIG. 6 is a perspective view of the portion of the torque box that defines the thrust reverser fan ramp that is included in the propulsion system of FIG. 1.
FIG. 7 is a perspective view of the thruster reverser portion of the nacelle that is included in the propulsion system of FIG. 1.

### DETAILED DESCRIPTION OF ASPECTS OF THE INVENTION

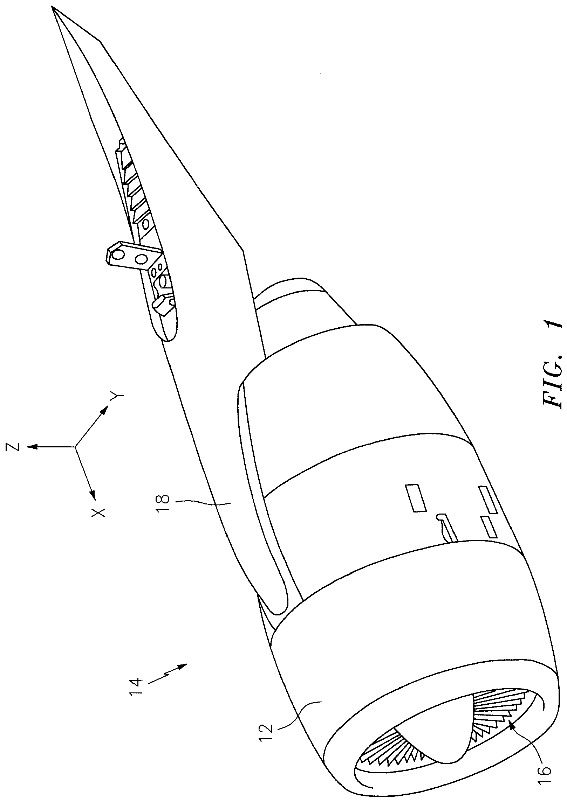

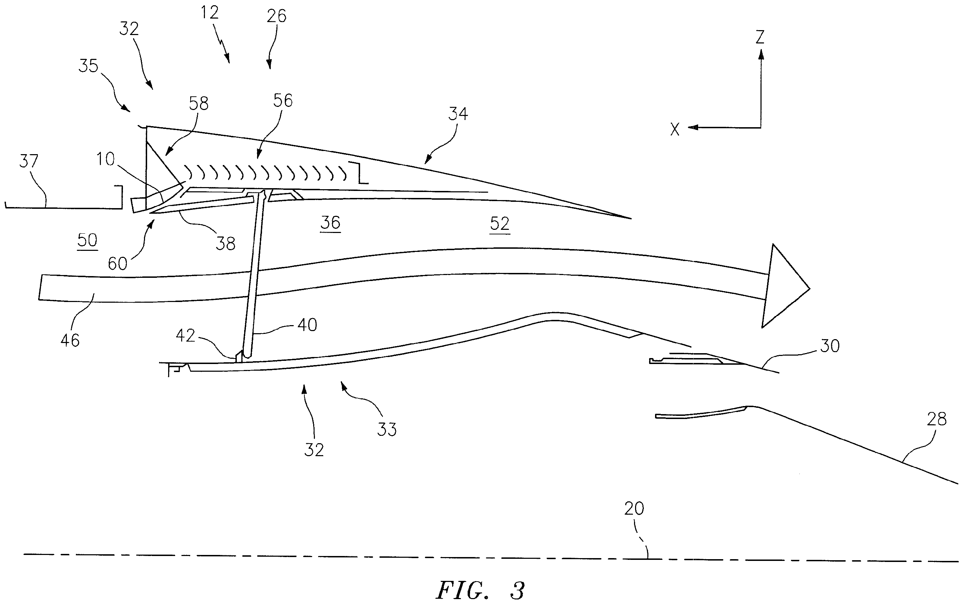

The present disclosure describes embodiments of a fan ramp 10 (see FIGS. 3-7), and embodiments of a nacelle 12 (see FIGS. 1-7) that include the fan ramp 10. The present disclosure describes aspects of the present invention with reference to the embodiments illustrated in the drawings; however, aspects of the present invention are not limited to the embodiments illustrated in the drawings. The present disclosure may describe one or more features as having a length extending relative to a x-axis, a width extending relative to a y-axis, and/or a height extending relative to a z-axis. The drawings illustrate the respective axes.

The present disclosure uses the terms or phrases "circumferential", "annular", "abut", and "noise suppression", and variations thereof, to describe one or more features. The term "circumferential", and variations thereof, are used herein to indicate that a feature extends along a curve that is centered about an axis of rotation. The term "annular", and variations thereof, are used herein to indicate that a feature is at least partially in the form of a ring (e.g., a ring in a circular shape or another shape). The term "abut", and variations thereof, are used herein to indicate either that a feature is in direct contact with another feature, or that a feature is in such close proximity to another feature that it is almost in direct contact with that feature. The phrase "noise suppression", and variations thereof, are used herein to indicate than an amplitude of a sound wave is reduced.

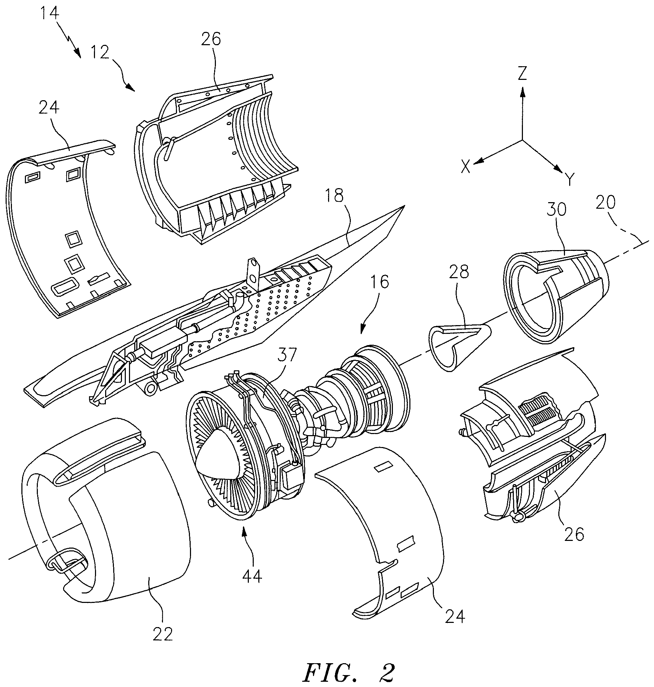

Referring to FIGS. 1 and 2, the fan ramp 10 (see FIGS. 3-5, and 7) is included in a nacelle 12, and the nacelle 12 is included in a propulsion system 14. The propulsion system 14 and the nacelle 12 can be configured in various different ways. In the embodiment illustrated in FIG. 1, and in accordance with the invention, the propulsion system 14 is a turbofan type propulsion system that may include a gas turbine engine 16 and a pylon 18 in addition to the nacelle 12. In the embodiment illustrated in FIG. 2, the gas turbine engine 16 extends in a lengthwise direction along an axial centerline 20; the nacelle 12 partially surrounds the gas turbine engine 16; and the pylon 18 connects the nacelle 12 and the gas turbine engine 16 to the underside of an aircraft wing (not shown). In this embodiment, the nacelle 12 includes an inlet 22, a fan cowl 24, a thrust reverser 26, an exhaust centerbody 28, and an exhaust nozzle 30. In this embodiment, the fan ramp 10 (see FIGS. 3-5, and 7) is included in the thrust reverser 26 portion of the nacelle 12.

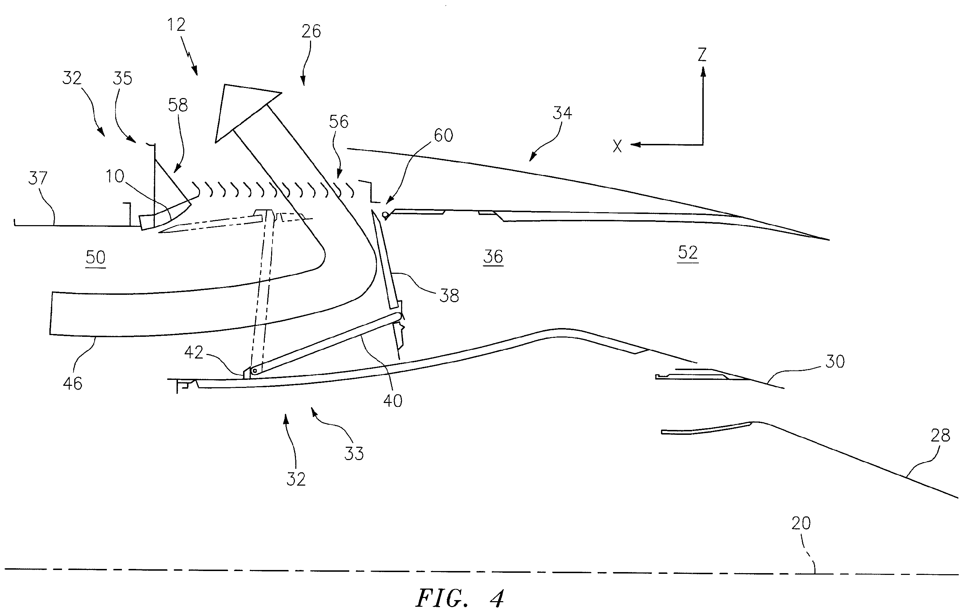

Referring now to FIGS. 3 and 4, in this embodiment the thrust reverser 26 is a cascade type thrust reverser that includes a fixed structure 32 and a translating structure 34; the fixed structure 32 and the translating structure 34 partially define a bypass duct 36; the bypass duct 36 extends circumferentially about the centerline 20; the fixed structure 32 includes a radially inner portion 33 and a radially outer portion 35; the radially outer portion 35 of the fixed structure 32 extends axially from the aft end of a fan case 37 that surrounds the fan section 44 of the gas turbine engine 16 (see FIG. 2); the translating structure 34 is selectively moveable in a generally lengthwise direction relative to the fixed structure 32, between a stowed position (see FIG. 3) (e.g., during a forward thrust operation) and a deployed position (see FIG. 4) (e.g., during a thrust reversing operation); the translating structure 34 engages a track of an upper track beam (not shown) and a track of a lower track beam (not shown) in a manner that permits the movement of the translating structure 34 between the stowed position (see FIG. 3) and the deployed position (see FIG. 4); the track of the upper track beam (not shown) extends in a generally lengthwise direction along an upper area of the nacelle 12 (shown in FIGS. 3 and 4); the track of the lower track beam (not shown) extends in a generally lengthwise direction along a lower area of the nacelle 12 (not shown in FIGS. 3 and 4); the translating structure 34 includes a plurality of blocker doors 38, each of which is pivotably connected to the radially inner portion 33 of the fixed structure 32 by a drag link 40 and a drag link fitting 42; each of the blocker doors 38 is moveable between a stowed position (see FIG. 3) (e.g., during a forward thrust operation of the nacelle 12) and a deployed position (see FIG. 4) (e.g., during a thrust reversing operation of the nacelle 12); the blocker doors 38 are configured to be in their respective stowed positions (see FIG. 3) when the translating structure 34 is in its stowed position (see FIG. 3); the blocker doors 38 are configured to be in their respective deployed positions (see FIG. 4) when the translating structure 34 is in its deployed position (see FIG. 4); when the blocker doors 38 are in the respective stowed positions (see FIG. 3), the blocker doors 38 are positioned proximate the translating structure 34 and each blocker door 38 extends in a direction that is generally parallel to the centerline 20; when the blocker doors 38 are in the respective deployed positions (see FIG. 4), the blocker doors 38 are positioned away from the translating structure 34 and each blocker door 38 extends in a direction that is generally perpendicular to the centerline 20. FIGS. 3 and 4 illustrate the relative positioning of the fan case 37, and the thrust reverser 26, the exhaust centerbody 28, and the exhaust nozzle 30 portions of the nacelle 12.

Referring back to FIG. 2, during operation of the propulsion system 14 in this embodiment, an airstream (not shown) enters the gas turbine engine 16 through a fan section 44 that is located at a forward end of the gas turbine engine 16; and the airstream is thereafter divided into at least a core airstream (not shown) and a bypass airstream 46 (see FIGS. 3 and 4). In this embodiment, the core airstream enters the gas turbine engine 16, where it is accelerated; the core airstream is then discharged through an aft end of the gas turbine engine 16; and the core airstream is then finally discharged through the exhaust nozzle 30 portion of the nacelle 12 to provide forward thrust. In the embodiment illustrated in FIGS. 3 and 4, when the translating structure 34 is in its stowed position (see FIG. 3), the bypass airstream 46 can pass from a forward end 50 of the bypass duct 36 to an aft end 52 of the bypass duct 36, through which it can be discharged to provide forward thrust; the drag links 40 each block only a small circumferential portion of the bypass duct 36, and thus the bypass airstream 46 can pass around them relatively easily; and the translating structure 34 covers an array of cascades 56 that are included in the radially outer portion 35 of the fixed structure 32 of the thrust reverser 26, thereby blocking the bypass airstream 46 from passing through the array of cascades 56. In this embodiment, when the translating structure 34 is in its deployed position (see FIG. 4), the array of cascades 56 is exposed; and the blocker doors 38 are deployed to redirect substantially all of the bypass airstream 46 toward the array of cascades 56, through which the bypass airstream 46 can be discharged to generate reverse thrust. In this embodiment, the array of cascades 56 extends circumferentially about the centerline 20 of the gas turbine engine 16.

The fan ramp 10 is an aerodynamic surface that is active during a thrust reversing operation of the nacelle 12 (e.g., when the translating structure 34 is in its deployed position and the blocker doors 38 are in their respective deployed positions (see FIG. 4)). The fan ramp 10 can be formed on and/or defined by various different components of the nacelle 12. In some embodiment, the fan ramp 10 can be formed on and/or defined by one or more components of the radially outer portion 35 of the fixed structure 32 of the thrust reverser 26. In the embodiment illustrated in FIGS. 3 and 4, the fan ramp 10 is defined by an annular torque box 58, which is a component of the radially outer portion 35 of the fixed structure 32 of the thrust reverser 26. In this embodiment, the fan ramp 10 is disposed immediately forward of the array of cascades 56 such that the fan ramp 10 extends between an aft end of the fan case 37 and a forward end of the array of cascades 56. In this embodiment, when the blocker doors 38 of the translating structure 34 are in their respective stowed positions (see FIG. 3), the forward edge 60 of each blocker door 38 abuts the fan ramp 10; and when the blocker doors 38 of the translating structure 34 are in their respective deployed positions (see FIG. 4), the fan ramp 10 is exposed to the bypass airstream 46 that passes through the bypass duct 36. In this embodiment, when the blocker doors 38 of the translating structure 34 are in their respective deployed positions (see FIG. 4), the fan ramp 10 aids in guiding the bypass airstream 46 to make a radially outward turn from the bypass duct 36 through the array of cascades 56.

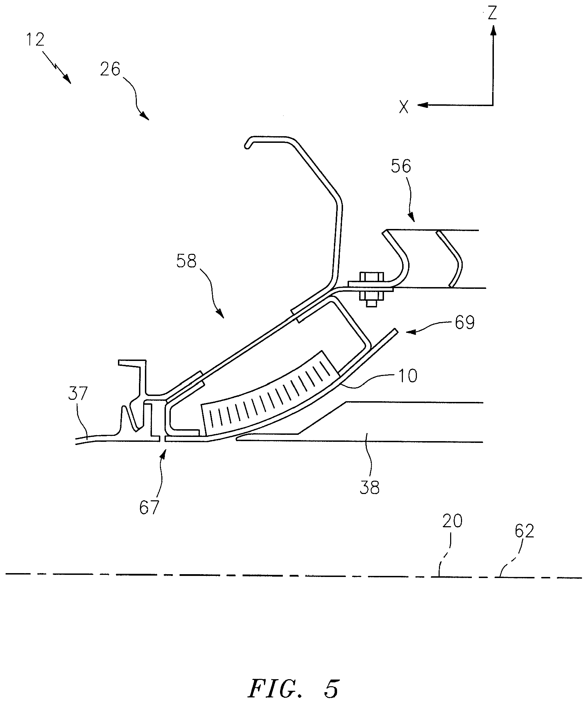

The fan ramp 10 can be configured in various different ways. In the embodiment illustrated in FIG. 5, the fan ramp 10 extends circumferentially about an axial fan ramp centerline 62; the fan ramp 10 is disposed relative to the gas turbine engine 16 such that the fan ramp centerline 62 is aligned with the centerline 20 of the gas turbine engine 16; and the fan ramp 10 extends axially between a fan ramp forward edge 67 and a fan ramp aft edge 69. In this embodiment, the fan ramp forward edge 67 is disposed proximate the aft end of the fan case 37; and the fan ramp aft edge 69 is disposed proximate the forward end of the array of cascades 56.

The fan ramp 10 includes a noise suppression feature that is operable to suppress noise that may be present within the propulsion system 14. In the embodiment illustrated in the drawings, for example, the noise suppression feature is operable to suppress noise that is present within the bypass duct 36. In this embodiment, the noise that is present within the bypass duct 36 can be caused, for example, by the high speed rotation of the fan in the fan section 44 of the gas turbine engine 16 (see FIG. 2), and/or turbulent flow of the bypass airstream 46 within the bypass duct 36. In some embodiments, the noise suppression feature is included only on portions of the fan ramp 10 that are blocked by the blocker doors 38 when the blocker doors 38 are in their respective stowed positions. In some embodiments, the noise suppression feature is additionally included on portions of the fan ramp 10 that are exposed to the bypass duct 36 when the blocker doors 38 are in their respective stowed positions. In this embodiment, the noise suppression feature is included on all portions of the fan ramp 10.

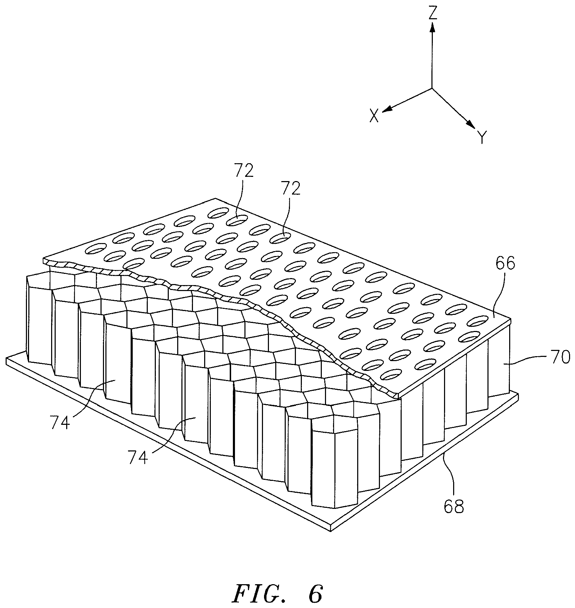

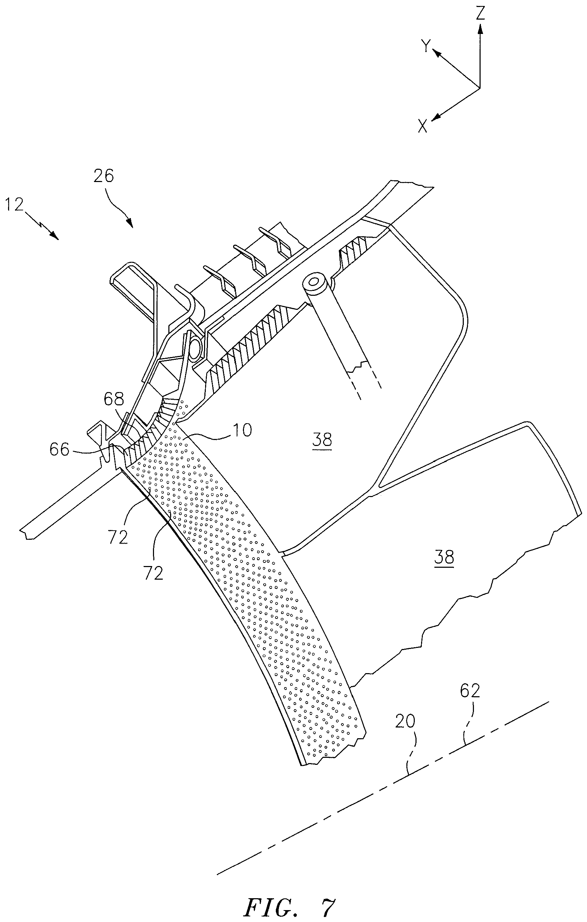

The noise suppression feature can be configured in various different ways. In some embodiments, the noise suppression feature is formed by and/or defined by a structure that is disposed relative to at least a portion of the fan ramp 10. In some embodiments, the noise suppression feature is formed by and/or defined by the one or more components of the nacelle 12 that form and/or define the fan ramp 10. In the embodiment illustrated in FIG. 5, for example, the noise suppression feature is defined by the portion of the torque box 58 that defines the fan ramp 10. In this embodiment, the portion of the torque box 58 that defines the fan ramp 10 has the structure shown in FIG. 6. The structure shown in FIG. 6 includes a perforated layer 66, a base layer 68, and a core layer 70, all of which are stacked in a superimposed relationship so that the core layer 70 is disposed between the perforated layer 66 and the base layer 68. In the structure shown in FIG. 6, the perforated layer 66 includes a plurality of apertures 72 that are configured to permit noise to pass there through; the core layer 70 includes a plurality of honeycomb-shaped substructures 74; each substructure 74 is operable receive an amount of the noise that passes through one or more of the apertures 72 in the perforated layer 66; and each substructure 74 is operable to reflect the noise back out of the apertures 72 such that sound waves of the reflected noise are out of phase and destructively interfere with sound waves of noise outside the substructure 74 in a known manner. The structure shown in FIG. 6 is positioned within the torque box 58 such that the perforated layer 66 forms a radially inner surface and base layer 68 forms a radially outer surface, as shown in FIG. 7. In some embodiments similar to the one illustrated in FIG. 7, the substructure 74 can be configured (or "tuned") to suppress only noise having one or more predetermined wavelengths. In such embodiments, the predetermined wavelengths can correspond to one or more wavelengths of the noise that may be present within the propulsion system 14.

The fan ramp 10 is not limited to use with the above-described noise suppression feature embodiment. In other embodiments, the noise suppression feature can be the same as or similar to one or more other noise suppression features that are known in the art. In some embodiments, for example, the noise suppression feature can be the same as or similar to one or more of the features disclosed in U.S. Patent No. 8,397,865. In some embodiments, the noise suppression features can include a bulk sound wave absorber (e.g., an open celled foam). In some embodiments, the noise suppression feature can include a reflector that is operable to reflect noise toward another noise suppression system that is disposed relative to the bypass duct 36.

While several embodiments have been disclosed, it will be apparent to those of ordinary skill in the art that aspects of the present invention include many more embodiments and implementations. Accordingly, aspects of the present invention are not to be restricted except in light of the attached claims. It will also be apparent to those of ordinary skill in the art that variations and modifications can be made without departing from the true scope of the present disclosure. For example, in some instances, one or more features disclosed in connection with one embodiment can be used alone or in combination with one or more features of one or more other embodiments.

## Claims

1. A nacelle for use in a propulsion system, and comprising a fan ramp (10) for use in a thrust reverser portion of the nacelle (12), the fan ramp (10) extending circumferentially about an axial fan ramp centerline (62), the fan ramp (10) comprising:
a forward edge (67) disposed proximate an aft end of a fan case (37), the fan case (37) at least partially surrounding a fan section (44) of a gas turbine engine (16);
an aft edge (69) disposed proximate a forward end of an array of cascades (56), the array of cascades (56) being operable to permit a bypass airstream to pass there through during a thrust reversing operation; and
a noise suppression feature (74) operable to suppress noise within the propulsion system;
wherein the nacelle includes a component that includes a perforated layer (66), a base layer (68), and a core layer (70), all of which are stacked in a superimposed relationship so that the core layer (70) is disposed between the perforated layer (66) and the base layer (68);
wherein the perforated layer (66) includes an aperture (72) that is configured to permit noise to pass there through, the core layer (70) includes a substructure (74) that is operable receive an amount of the noise that passes through the aperture (72) and that is operable to reflect the noise back out of the aperture (72) such that sound waves of the reflected noise are out of phase and destructively interfere with sound waves of noise outside the substructure,
wherein the propulsion system is a turbofan propulsion system, and the nacelle (12) and the array of cascades (56) extend circumferentially about an axial centerline (20), the nacelle (12) further comprising:
a translating structure (34) operable to be moved in an axial direction between a stowed position, in which the translating structure (34) blocks the bypass airstream from passing from a bypass duct through the array of cascades (56), and a deployed position, in which the translating structure (34) permits the bypass airstream to pass from the bypass duct through the array of cascades (56);
a blocker door (38) pivotally mounted to the translating structure (34), and operable to be moved between a stowed position, in which the blocker door (38) is positioned adjacent to the translating structure (34) and is extending generally parallel to the axial centerline (20), and a deployed position, in which the blocker door (38) is positioned away from the translating structure (34) and is extending generally perpendicular to the axial centerline (20) to aid in guiding the bypass airstream from the bypass duct through the array of cascades (56);
wherein the fan ramp (10) is operable to aid in guiding the bypass airstream from the bypass duct through the array of cascades (56) when the translating structure (34) and the blocker door (38) are in their respective deployed positions,
**characterised in that** the noise suppression feature (74) is included on a portion of the fan ramp (10) that is blocked by the blocker door (38) when the blocker door (38) is in its stowed position.

2. The nacelle of claim 1, wherein the fan ramp (10) is an aerodynamic surface that is active during the thrust reversing operation.

3. The nacelle of claim 1 or 2, wherein the fan ramp (10) is exposed to a bypass airstream passing through a bypass duct of the propulsion system during the thrust reversing operation.

4. The nacelle of claim 3, wherein the noise suppression feature (74) is operable to suppress noise within the bypass duct.

5. The nacelle of any preceding claim, wherein the fan ramp (10) aids in guiding the bypass airstream to make a radially outward turn from the bypass duct through the array of cascades (56) during the thrust reversing operation.

6. The nacelle of any preceding claim, wherein the fan ramp centerline (62) is aligned with an axial centerline (20) of a gas turbine engine (16) included in the propulsion system.

7. The nacelle of any preceding claim, wherein the noise suppression feature (74) is defined by a component of the nacelle that at least partially defines the fan ramp (10).

8. The nacelle of any preceding claim, wherein the noise suppression feature or substructure (74) is honey-comb shaped.

9. The nacelle of any of claims 1 to 8, wherein the noise suppression feature is defined by a bulk sound wave absorber.

10. The nacelle of any preceding claim, wherein the noise suppression feature is a first noise suppression feature that is defined by a reflector that is operable to reflect noise toward a second noise suppression system.

11. The nacelle of any preceding claim, wherein the noise suppression feature (74) is included on a portion of the fan ramp (10) exposed to the bypass duct when the blocker door (38) is in its stowed position.

## Patentansprüche

1. Gondel zur Verwendung in einem Antriebssystem und die eine Lüfterrampe (10) zur Verwendung in einem Schubumkehrvorrichtungsabschnitt der Gondel (12) aufweist, wobei sich die Lüfterrampe (10) in Umfangsrichtung um eine axiale Lüfterrampenmittellinie (62) erstreckt, wobei die Lüfterrampe (10) Folgendes aufweist:
eine Vorderkante (67), die nahe einem hinteren Ende eines Lüftergehäuses (37) angeordnet ist, wobei das Lüftergehäuse (37) einen Lüfterabschnitt (44) eines Gasturbinentriebwerks (16) mindestens teilweise umgibt;
eine Hinterkante (69), die nahe einem vorderen Ende von einem Kaskadenarray (56) angeordnet ist, wobei das Kaskadenarray (56) dazu betriebsfähig ist, einem Umgehungsluftstrom das Durchströmen dadurch während eines Schubumkehrvorgangs zu ermöglichen; und
ein Rauschunterdrückungsmerkmal (74), das dazu betriebsfähig ist, Rausch innerhalb des Antriebssystems zu unterdrücken;
wobei die Gondel eine Komponente beinhaltet, die eine perforierte Schicht (66), eine Grundschicht (68) und eine Kernschicht (70) beinhaltet, die alle in einem überlagerten Verhältnis gestapelt sind, sodass die Kernschicht (70) zwischen der perforierten Schicht (66) und der Grundschicht (68) angeordnet ist;
wobei die perforierte Schicht (66) eine Öffnung (72) beinhaltet, die dazu konfiguriert ist, Rausch zu ermöglichen, dadurch zu strömen, wobei die Grundschicht (70) eine Unterstruktur (74) beinhaltet, die dazu betriebsfähig ist, eine Menge des Rausches, der durch die Öffnung (72) strömt, aufzunehmen und die dazu betriebsfähig ist, den Rausch aus der Öffnung (72) heraus zu reflektieren, sodass Schallwellen des reflektierten Rauschs phasenverschoben sind und störend mit Schallwellen des Rauschs außerhalb der Unterstruktur interferieren,
wobei das Antriebssystem ein Turbolüfter-Antriebssystem ist und sich die Gondel (12) und das Kaskadenarray (56) in Umfangsrichtung um eine axiale Mittellinie (20) erstrecken, wobei die Gondel (12) ferner Folgendes aufweist:
eine Verschiebungsstruktur (34), die dazu betriebsfähig ist, in eine axiale Richtung zwischen einer verstauten Position, in welcher die Verschiebungsstruktur (34) den Umgehungsstrom daran hindert, aus einem Umgehungskanal durch das Kaskadenarray (56) zu strömen, und einer ausgefahrenen Position bewegt zu werden, in welcher die Verschiebungsstruktur (34) dem Umgehungsluftstrom ermöglicht, durch das Kaskadenarray (56) zu strömen;
eine Blockierungstür (38), die schwenkend an die Verschiebungsstruktur (34) montiert ist und dazu betriebsfähig ist, zwischen einer verstauten Position, in welcher die Blockierungstür (38) benachbart zu der Verschiebungsstruktur (34) positioniert ist und sich im Allgemeinen parallel zu der axialen Mittellinie (20) erstreckt, und einer ausgefahrenen Position bewegt zu werden, in welcher die Blockierungstür (38) von der Verschiebungsstruktur (34) entfernt positioniert ist und sich im Allgemeinen senkrecht zu der axialen Mittellinie (20) erstreckt, um beim Leiten des Umgehungsstroms aus dem Umgehungskanal durch das Kaskadenarray (56) behilflich zu sein;
wobei die Lüfterrampe (10) dazu betriebsfähig ist, beim Leiten des Umgehungsluftstroms aus dem Umgehungskanal durch das Kaskadenarray (56) behilflich zu sein, wenn sich die Verschiebungsstruktur (34) und die Blockierungstür (38) in ihren jeweiligen ausgefahrenen Positionen befinden,
**dadurch gekennzeichnet, dass** das Rauschunterdrückungsmerkmal (74) auf einem Abschnitt der Lüfterrampe (10) beinhaltet ist, die durch die Blockierungstür (38) blockiert ist, wenn sich die Blockierungstür (38) in ihrer verstauten Position befindet.

2. Gondel nach Anspruch 1, wobei die Lüfterrampe (10) eine aerodynamische Fläche ist, die während des Schubumkehrvorgangs aktiv ist.

3. Gondel nach Anspruch 1 oder 2, wobei die Lüfterrampe (10) einem Umgehungsluftstrom ausgesetzt ist, der während des Schubumkehrvorgangs durch einen Umgehungskanal des Antriebssystems strömt.

4. Gondel nach Anspruch 3, wobei das Rauschunterdrückungsmerkmal (74) dazu betriebsfähig ist, Rausch innerhalb des Umgehungskanals zu unterdrücken.

5. Gondel nach einem der vorhergehenden Ansprüche, wobei die Lüfterrampe (10) beim Leiten des Umgehungsluftstroms behilflich ist, um während des Schubumkehrvorgangs eine radial nach außen verlaufende Abbiegung aus dem Umgehungskanal durch das Kaskadenarray (56) durchzuführen.

6. Gondel nach einem der vorhergehenden Ansprüche, wobei die Lüfterrampenmittellinie (62) mit einer axialen Mittellinie (20) eines Gasturbinentriebwerks (16) ausgerichtet ist, das in dem Antriebssystem beinhaltet ist.

7. Gondel nach einem der vorhergehenden Ansprüche, wobei das Rauschunterdrückungsmerkmal (74) durch eine Komponente der Gondel definiert ist, welche die Lüfterrampe (10) mindestens teilweise definiert.

8. Gondel nach einem der vorhergehenden Ansprüche, wobei das Rauschunterdrückungsmerkmal oder die Unterstruktur (74) wabenförmig ist.

9. Gondel nach einem der Ansprüche 1 bis 8, wobei das Rauschunterdrückungsmerkmal durch einen Hauptschallwellenabsorber definiert ist.

10. Gondel nach einem der vorhergehenden Ansprüche, wobei das Rauschunterdrückungsmerkmal ein erstes Rauschunterdrückungsmerkmal ist, das durch einen Reflektor definiert ist, der dazu betriebsfähig ist, Rausch zu einem zweiten Rauschunterdrückungssystem zu reflektieren.

11. Gondel nach einem der vorhergehenden Ansprüche, wobei das Rauschunterdrückungsmerkmal (74) auf einem Abschnitt der Lüfterrampe (10) beinhaltet ist, das dem Umgehungskanal ausgesetzt ist, wenn sich die Blockierungstür (38) in ihrer verstauten Position befindet.

## Revendications

1. Nacelle à utiliser dans un système de propulsion, et comprenant une rampe de ventilateur (10) à utiliser dans une portion d'inverseur de poussée de la nacelle (12), la rampe de ventilateur (10) s'étendant circonférentiellement autour d'une ligne centrale de rampe de ventilateur axiale (62), la rampe de ventilateur (10) comprenant :
un bord avant (67) disposé à proximité d'une extrémité arrière d'un carter de ventilateur (37), le carter de ventilateur (37) entourant au moins partiellement une section ventilateur (44) d'un moteur de turbine à gaz (16) ;
un bord arrière (69) disposé à proximité d'une extrémité avant d'un réseau de cascades (56), le réseau de cascades (56) étant actionnable pour permettre à un flux d'air de dérivation d'y passer à travers pendant une opération d'inversion de poussée ; et
un élément de suppression de bruit (74) actionnable pour supprimer le bruit à l'intérieur du système de propulsion ;
dans laquelle la nacelle comprend un composant qui comprend une couche perforée (66), une couche de base (68), et une couche centrale (70), qui sont toutes empilées dans une relation superposée de sorte que la couche centrale (70) est disposée entre la couche perforée (66) et la couche de base (68) ;
dans laquelle la couche perforée (66) comprend une ouverture (72) qui est configurée pour permettre au bruit d'y passer à travers, la couche centrale (70)comprend une sous-structure (74) qui est actionnable pour recevoir une quantité du bruit qui passe à travers l'ouverture (72) et qui est actionnable pour réfléchir le bruit hors de l'ouverture (72) de sorte que des ondes sonores du bruit réfléchi sont déphasées et interfèrent de manière destructive avec des ondes sonores de bruit à l'extérieur de la sous-structure,
dans laquelle le système de propulsion est un système de propulsion de turboréacteur à double flux, et la nacelle (12) et le réseau de cascades (56) s'étendent circonférentiellement autour d'une ligne centrale axiale (20), la nacelle (12) comprenant en outre :
une structure de translation (34) actionnable pour être déplacée dans une direction axiale entre une position rangée, dans laquelle la structure de translation (34) empêche le flux d'air de dérivation de passer d'un conduit de dérivation à travers le réseau de cascades (56), et une position déployée, dans laquelle la structure de translation (34) permet au flux d'air de dérivation de passer du conduit de dérivation à travers le réseau de cascades (56) ;
une porte de blocage (38) montée de manière pivotante à la structure de translation (34), et actionnable pour être déplacée entre une position rangée, dans laquelle la porte de blocage (38) est positionnée de manière adjacente à la structure de translation (34) et s'étend généralement parallèlement à la ligne centrale axiale (20), et une position déployée, dans laquelle la porte de blocage (38) est positionnée en s'éloignant de la structure de translation (34) et s'étend généralement perpendiculairement à la ligne centrale axiale (20) pour aider à guider le flux d'air de dérivation du conduit de dérivation à travers le réseau de cascades (56) ;
dans laquelle la rampe de ventilateur (10) est actionnable pour aider à guider le flux d'air de dérivation du conduit de dérivation à travers le réseau de cascades (56) lorsque la structure de translation (34) et la porte de blocage (38) sont dans leurs positions déployées respectives,
**caractérisée en ce que** l'élément de suppression de bruit (74) est compris sur une portion de la rampe de ventilateur (10) qui est bloquée par la pore de blocage (38) lorsque la porte de blocage (38) est dans sa position rangée.

2. Nacelle selon la revendication 1, dans laquelle la rampe de ventilateur (10) est une surface aérodynamique qui est active pendant l'opération d'inversion de poussée.

3. Nacelle selon la revendication 1 ou 2, dans laquelle la rampe de ventilateur (10) est exposée à un flux d'air de dérivation passant à travers un conduit de dérivation du système de propulsion pendant l'opération d'inversion de poussée.

4. Nacelle selon la revendication 3, dans laquelle l'élément de suppression de bruit (74) est actionnable pour supprimer le bruit à l'intérieur du conduit de dérivation.

5. Nacelle selon une quelconque revendication précédente, dans laquelle la rampe de ventilateur (10) aide à guider le flux d'air de dérivation pour faire un tour radialement vers l'extérieur du conduit de dérivation à travers le réseau de cacades (56) pendant l'opération d'inversion de poussée.

6. Nacelle selon une quelconque revendication précédente, dans laquelle la ligne centrale de rampe de ventilateur (62) est alignée avec une ligne centrale axiale (20) d'un moteur de turbine à gaz (16) compris dans le système de propulsion.

7. Nacelle selon une quelconque revendication précédente, dans laquelle l'élément de suppression de bruit (74) est défini par un composant de la nacelle qui définit au moins partiellement la rampe de ventilateur (10).

8. Nacelle selon une quelconque revendication précédente, dans laquelle l'élément de suppression de bruit ou la substructure (74) est en forme de nid d'abeilles.

9. Nacelle selon l'une quelconque des revendications 1 à 8, dans laquelle l'élément de suppression de bruit est défini par un absorbeur d'ondes sonores de volume.

10. Nacelle selon une quelconque revendication précédente, dans laquelle l'élément de suppression de bruit est un premier élément de suppression de bruit qui est défini par un réflecteur qui est actionnable pour réfléchir le bruit vers un deuxième système de suppression de bruit.

11. Nacelle selon une quelconque revendication précédente, dans laquelle l'élément de suppression de bruit (74) est compris sur une portion de la rampe de ventilateur (10) exposée au conduit de dérivation lorsque la porte de blocage (38) est dans sa position rangée.
